# FASCICULE DE BREVET EUROPEEN

(11) **EP 2 130 746 B1**
(45) Date de publication et mention de la délivrance du brevet: **08.08.2012**
(21) Numéro de dépôt: 09161140.0
(22) Date de dépôt: 26.05.2009
(51) Int. Cl.: B62D 25/10, B29C 45/16, B29C 45/14, B29C 45/17, B29L 31/30

(54) **Capot de vehicule, dispositif et procede de fabrication par moulage d'un tel capot.**
Fahrzeugverdeck, Vorrichtung und Verfahren zur Herstellung durch Formguss eines solchen Verdecks
Vehicle bonnet, method and device for manufacturing such a bonnet by moulding.

(30) Priorité: 03.06.2008 FR 0853640
(43) Date de publication de la demande: 09.12.2009
(73) Titulaire: PEUGEOT CITROËN AUTOMOBILES SA, 78140 Velizy-Villacoublay (FR)
(72) Inventeur: Groeninck, François, 95170 Deuil la Barre (FR)
(74) Mandataire: Fernandez, Francis Lionel

(56) Documents cités:
- WO-A-00/56517
- DE-A1- 4 219 938
- FR-A- 2 891 236
- FR-A- 2 907 078
- US-A- 4 783 298
- US-A1- 2005 161 979
- DATABASE WPI Week 200422 Thomson Scientific, London, GB; AN 2004-229876 XP002511094 -& JP 2003 276119 A (UBE IND LTD) 30 septembre 2003 (2003-09-30)

## Description

La présente invention concerne un capot de véhicule, en particulier de véhicule automobile. Elle concerne également un dispositif de fabrication par moulage d'un tel capot. Elle concerne enfin un procédé de fabrication par moulage d'un capot de véhicule à l'aide d'un tel dispositif de fabrication.

Le capot est un élément de l'avant de la carrosserie d'un véhicule automobile. Il recouvre et protège le moteur quand il est à l'avant, ou le coffre à bagages quand le moteur est à l'arrière. Le capot est, en général, constitué d'une tôle métallique, mais peut être aussi réalisé avec un matériau composite, comme du polyester armé de fibres de verre.

En ce qui concerne les capots pour lesquels on cherche à réduire la masse, ils sont réalisés, le plus souvent, en aluminium.

De manière classique, les capots sont constitués de trois éléments principaux : la peau, la doublure et un élément d'insonorisation. Ces éléments sont assemblés par soudage. La conception des capots prend en compte leur déformation selon un schéma programmé pour minimiser les risques de blessures en cas de choc.

On connaît également des capots à structure composite. Par exemple, le document FR 2 645 493 décrit un tel capot constitué par une plaque en matériau plastique, de type mousse de polyuréthane. Dans cette plaque est noyé un grillage métallique gaufré. Ce grillage est conformé de manière à entretoiser au moins une couche superficielle de fibres de verre. Le grillage et la couche de verre sont noyés dans le matériau plastique.

On connait par le document US-A-20050161979 un capot en matériau plastique obtenu depuis un ensemble mono pièce juxtaposant une plaque formant la peau d'un capot et une autre plaque formant la doublure de ce capot, cet ensemble étant plié par son milieu pour ramener la doublure sous la peau, puis soudé bord à bord pour solidariser la doublure à la peau.

On connait par le document FR2907078 une doublure de capot comportant des corps creux et des nervures.

Le but de la présente invention est de fournir un capot de véhicule, en particulier de véhicule automobile, qui soit mono pièce, de masse réduite, avec des performances mécaniques supérieures à celles des capots connus de l'art antérieur.

Un autre but de la présente invention est de fournir un tel capot, qui soit de conception simple, de réalisation aisée, et qui soit économique.

Enfin, c'est également un but de la présente invention de fournir un dispositif et un procédé de fabrication par moulage d'un capot de véhicule, qui soient plus simples et plus économiques que les dispositifs et procédés de fabrication connus de l'art antérieur, notamment parce qu'ils utilisent un matériel de moulage plus simple et qu'ils permettent de supprimer des opérations d'assemblage.

Pour parvenir à ces buts, la présente invention a pour objet capot de véhicule, en particulier de véhicule automobile, dans lequel est noyée une trame de renfort mécanique, caractérisé en ce qu'il est rigidifiée par un réseau intégré de corps creux et par un réseau intégré de nervures, ledit réseau de nervures assurant la liaison entre les corps creux, et en ce qu'il forme avec son réseau de corps creux et son réseau de nervure un ensemble mono pièce en matériau plastique obtenu directement par moulage

De manière préférentielle, la trame de renfort est une trame métallique.

De manière préférentielle également, la trame métallique est réalisée en acier inoxydable.

La trame de renfort peut être, par exemple, une trame en matériau non ferreux.

La matière plastique du capot peut être, par exemple, une matière thermoplastique ou thermodurcissable chargée d'un matériau conducteur.

La matière avec laquelle est réalisée la trame de renfort peut être choisie parmi les matières suivante : fibres de verre, fibres de carbone, fibres de basalte.

Des bossages creux peuvent être prévus dans certaines zones du capot pour améliorer l'absorption des efforts en cas de choc piéton.

La surface supérieure du capot peut être revêtue d'une couche de surface à peindre.

De préférence, une partie au moins de la surface inférieure du capot est revêtue d'une couche de matière d'isolation acoustique.

Selon un mode préféré de réalisation de l'invention, la trame métallique en acier inoxydable est constituée d'une pluralité de segments et comporte au moins des segments reliant la zone de serrure et les zones des charnières du capot.

Le capot peut comporter un orifice traversant ou puit, qui traverse le corps creux du capot et qui sert de canon pour la fixation d'un élément ou emblème.

En variante, le capot peut comporter un puit débouchant, qui ne traverse pas totalement le corps creux du capot de manière à réaliser un renforcement du corps creux et à rendre ce dernier plus rigide en flexion et en torsion.

La présente invention a également pour objet un dispositif de fabrication par moulage d'un capot de véhicule conforme à celui décrit ci-dessus dans ses grandes lignes. Ce nouveau dispositif comprend les trois parties principales suivantes :
- une première partie de moule faisant fonction de matrice et située à la base du dispositif,
- une deuxième partie de moule faisant également fonction de matrice, qui est située du côté des nervures du capot et qui peut être déplacée par rapport à ladite première partie de moule de façon à permettre la réalisation d'une injection de matière, et
- une troisième partie de moule, qui est située du côté de la peau du capot et qui peut être déplacée par rapport auxdites première et deuxième parties de moule de façon à permettre aussi la réalisation d'une injection de matière.

La deuxième partie de moule peut comporter des éléments magnétiques pour le maintien par des moyens magnétiques ou électromagnétiques de la trame de renfort du capot.

De préférence, ce dispositif de fabrication par moulage comprend des moyens de réalisation des corps creux du capot, qui sont des moyens d'injection de gaz ou d'eau.

La présente invention a enfin pour objet un procédé de fabrication par moulage d'un capot de véhicule. Ce nouveau procédé, qui utilise un dispositif de moulage tel que celui décrit ci-dessus dans ses grandes lignes, comporte les étapes suivantes :
- mise en place de la trame de renfort de capot, en appui sur les créneaux de fond de nervure et sur les flancs de nervure,
- injection d'une matière plastique rigide pour la réalisation du capot,
- déplacement de la troisième partie de moule, qui s'écarte des autres parties de moule,
- injection d'une matière thermoplastique d'aspect pour réaliser une couche de finition peinture du capot,
- déplacement de la deuxième partie de moule, qui s'écarte de la troisième partie de moule,
- injection d'une matière plastique pour assurer la liaison avec la trame de renfort,
- injection d'une mousse de matière plastique expansible pour l'insonorisation.

D'autres buts, avantages et caractéristiques de l'invention apparaîtront dans la description qui suit d'un exemple de réalisation de l'invention, non limitatif de l'objet et de la portée de la présente demande de brevet, accompagnée de dessins dans lesquels :
- la figure 1 est une vue en coupe longitudinale d'une partie du capot, selon la présente invention,
- la figure 2 représente, de manière schématique, en coupe longitudinale, les parties de moule d'injection d'un capot selon la présente invention,
- la figure 3 illustre, de manière schématique, en coupe longitudinale, les différents mouvements des parties de moule de la figure 2, pour le moulage par injection d'un capot selon la présente invention,
- la figure 4 représente un exemple de trame de renfort assurant la rigidité d'ensemble du capot selon la présente invention,
- la figure 5 représente, de manière schématique, en coupe longitudinale, les parties d'un moule pour le moulage par injection d'une variante de réalisation du capot de la figure 2,
- la figure 6 représente, de manière schématique, en coupe longitudinale, le capot obtenu par moulage par injection et revêtu de ses couches de finition,
- la figure 7 représente, de manière schématique, en coupe longitudinale, un puit traversant pour la fixation d'un élément sur le capot,
- la figure 8 représente, de manière schématique, en coupe longitudinale, une variante non traversante du puit de la figure 7, et
- la figure 9 est un schéma illustrant le procédé et le dispositif de fabrication par moulage d'un capot selon la présente invention.

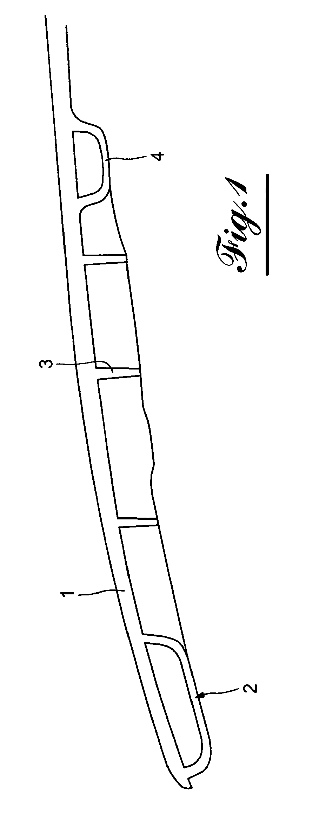

En référence au dessin de la figure 1, un capot de véhicule automobile est constitué d'une peau 1, rigidifiée, par deux moyens, qui sont les suivants :
- un réseau de corps creux référencés 2, obtenus par la mise en oeuvre d'une technique d'injection d'eau ou de gaz, et
- un réseau de nervures 3, ces nervures assurant la liaison entre les corps creux 2.

La même technique permet de réaliser des bossages creux 4, qui sont situés aux endroits permettant d'améliorer l'absorption aux efforts, de façon à réduire la course pour répondre aux exigences de la réglementation relative aux chocs piéton.

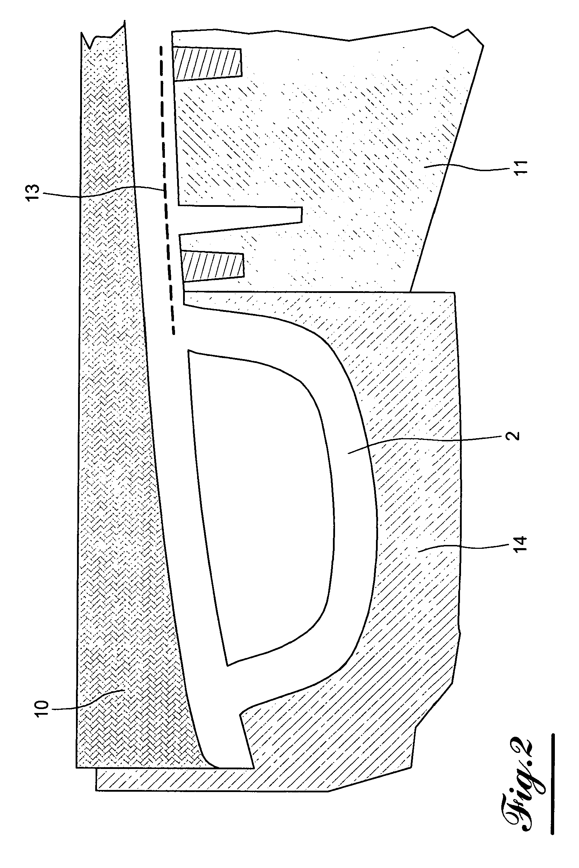

Comme représenté de manière schématique sur le dessin de la figure 2, le capot selon l'invention peut être un capot dit « hybride », parce que réalisé en plusieurs matériaux. Une trame de renfort 13, de préférence en acier inoxydable, est installée dans le moule de fabrication du capot pour être noyée dans la matière thermoplastique de la peau 1. Cette trame 13 assume, principalement du fait de sa matière constitutive, trois fonctions, qui sont les suivantes :
- elle permet d'éviter les problèmes de corrosion,
- elle permet de résoudre les problèmes de transparence aux phénomènes électromagnétiques entre le sous-capot et l'extérieur, et
- elle renforce les propriétés mécaniques du capot.

Le moule de fabrication du capot par injection des différents matériaux composant le capot est constitué en trois parties principales, à savoir une première partie de moule 14, faisant fonction de matrice, située à la base du moule, et deux parties « pilotables », à savoir la deuxième partie de moule 11 et la troisième partie de moule 10 respectivement, dont les mouvements relatifs par rapport à la première partie de moule 14 permettent d'assurer des injections successives de matériaux différents, comme il est décrit ci-dessous.

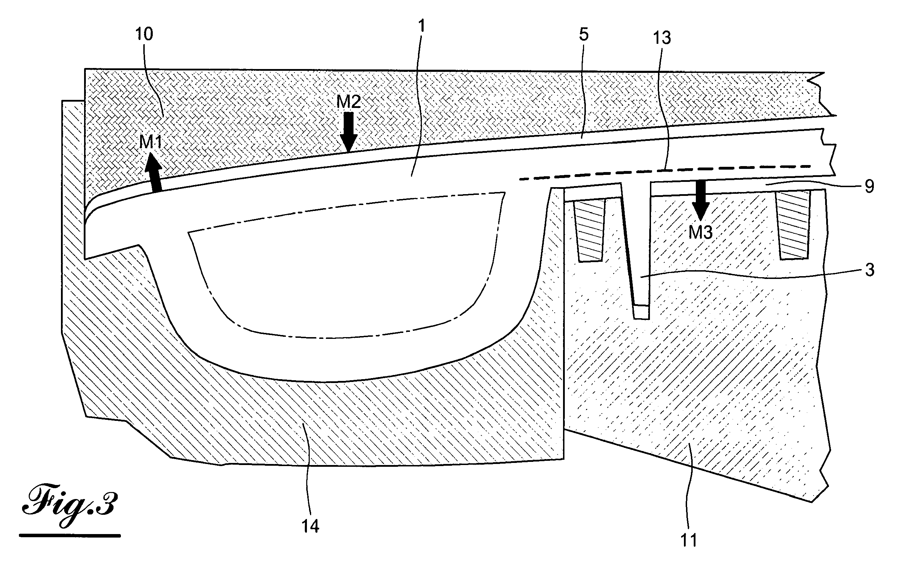

En référence au schéma de la figure 3, après une première injection d'une matière thermoplastique et la formation qui en résulte de la peau 1, on réalise une couche de surface à peindre, référencée 5, par déplacement de la partie de moule 10 selon un mouvement M1 dirigé vers le haut, suivi d'une injection de matière thermoplastique d'aspect pour la formation de la couche à peindre 5 et d'un mouvement de compression, référencé M2, par déplacement vers le bas de la partie de moule 10.

Ensuite, un mouvement M3 de déplacement vers le bas de la partie de moule 11 permet l'injection d'un matériau expansible d'isolation acoustique 9, de type mousse acoustique à bulles ouvertes, sur la surface interne du capot.

Ainsi, les mouvements successifs M1, M2 et M3 des parties de moule « pilotables » 10 et 11 permettent de réaliser l'ensemble des éléments d'un capot en une seule pièce et composé de matériaux différents, par conséquent un capot mono pièce composite.

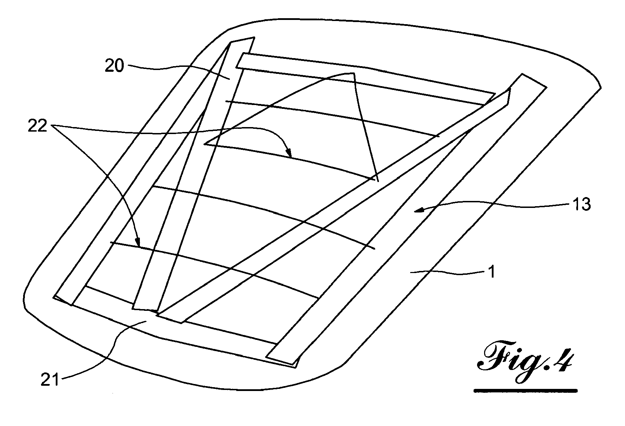

La figure 4 représente un exemple de trame de renfort 13 assurant la rigidité d'ensemble du capot, selon la présente invention. La trame 13 est constituée de segments sensiblement rectilignes qui forment un ensemble qui fait la liaison entre les éléments de maintien du capot dans la zone de la serrure 21 et les zones des charnières 20. La référence 22 désigne un réseau de fils en acier inox en dimension et en nombre suffisant pour résoudre le problème de protection électromagnétique.

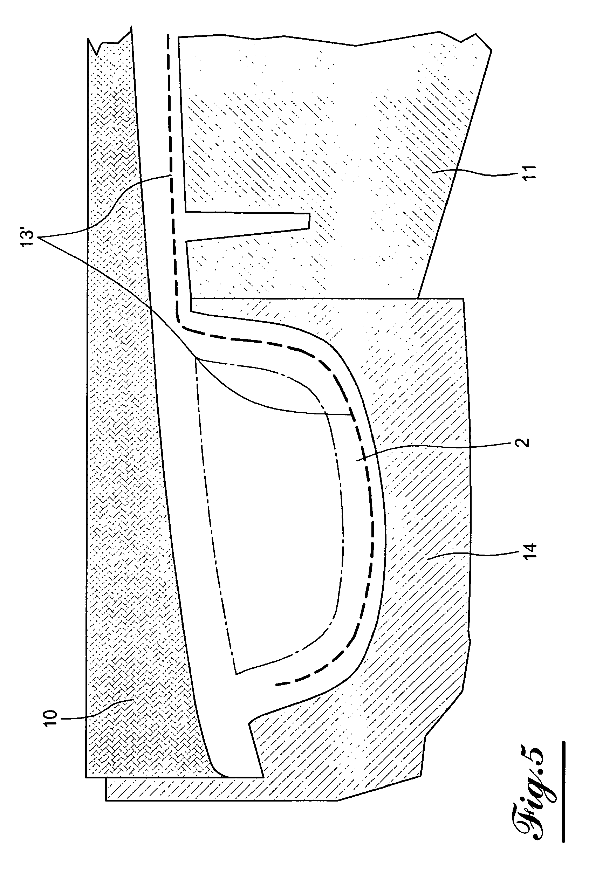

Une variante du capot hybride composite mono pièce décrit ci-dessus est représentée sur le dessin de la figure 5. Cette variante de capot, dite « composite renforcé », comporte une trame 13', installée dans le moule, réalisée dans un matériau non ferreux, tel que de la fibre de verre, de la fibre de carbone, de la fibre de basalte, etc. La peau 1 du capot est obtenue par moulage par injection d'une matière thermoplastique ou d'une matière thermodurcissable chargée d'un matériau conducteur pour résoudre le problème électromagnétique.

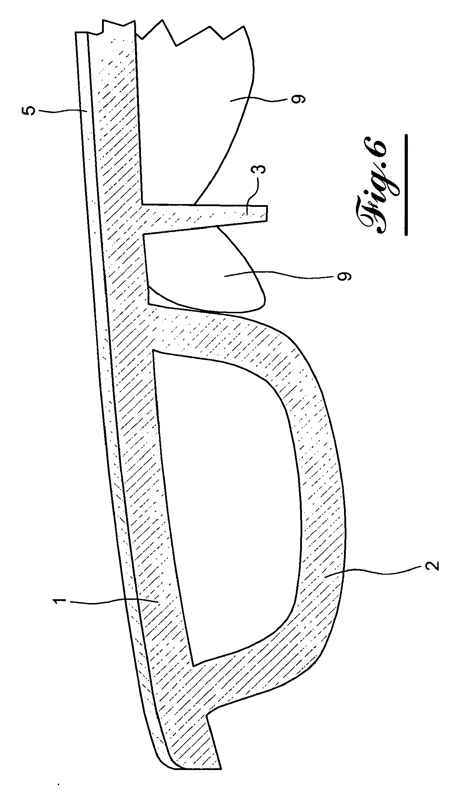

Les injections successives réalisées ont pour résultat l'obtention de la pièce finie de la figure 6, représentée avec sa couche de finition 5 pour peinture, une nervure 3 et la mousse 9, injectée après le mouvement M3 de la partie de moule 11 et en expansion maximale.

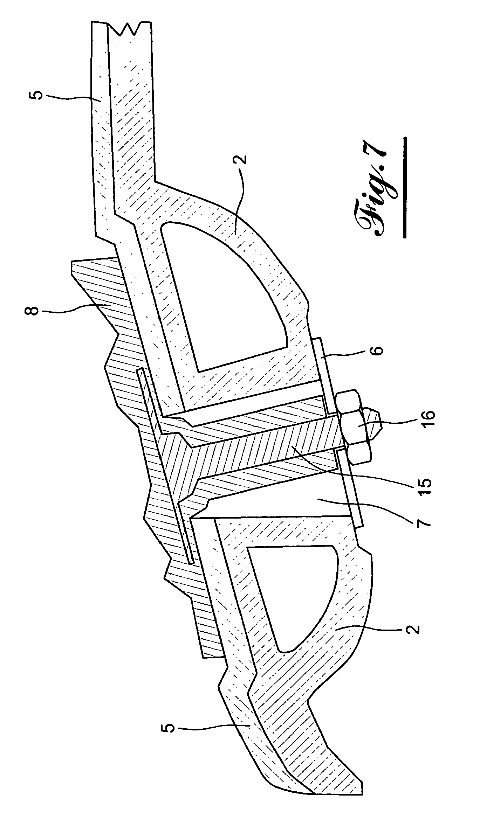

La figure 7 montre, de manière schématique, la possibilité de créer un puit 7 qui sert de canon pour la fixation d'un élément 8 ou emblème au travers du corps creux 2. La référence 6 désigne une plaque de fixation pour le maintien de l'élément 8 sur la peau 1 par l'intermédiaire de la vis de fixation 15 et de l'écrou de serrage 16.

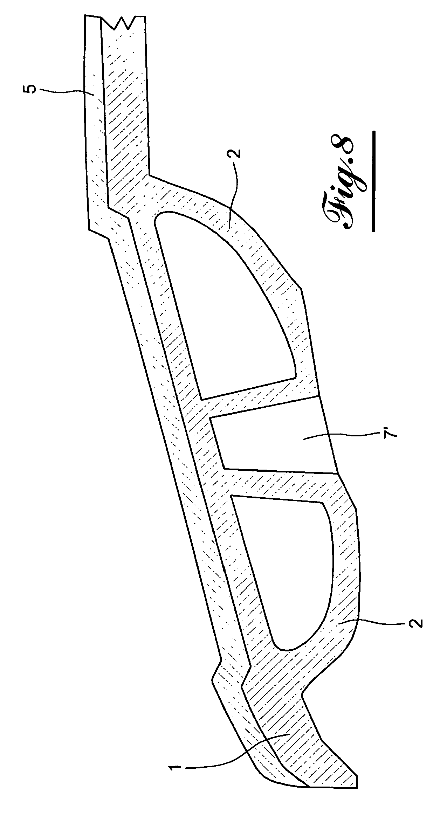

La figure 8 est un schéma qui représente une variante non traversante du puit de la figure 7, référencée 7'. De cette manière, on réalise un renforcement du corps creux 2, en particulier on rend le corps creux 2 plus rigide en flexion et en torsion.

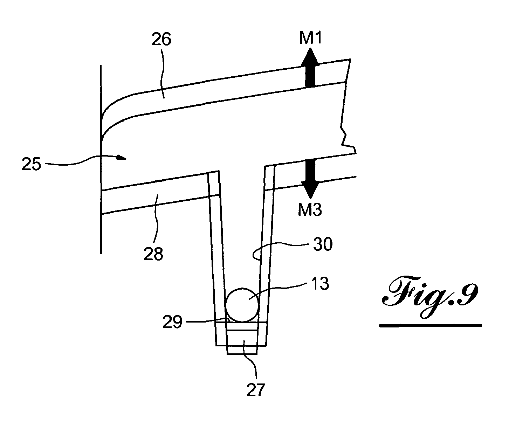

On a représenté, sur la figure 9, le procédé de moulage par injection permettant de réaliser le capot en une seule pièce dans le même moule.

Ce procédé comporte les étapes suivantes :
- mise en place de la trame 13 de renfort de capot, en appui sur les créneaux de fond 29 de nervure 3 et sur les flancs 30 de nervure 3,
- injection d'une matière plastique rigide 25 pour la formation du capot,
- déplacement (selon la flèche M1) de la partie de moule 10 (moule côté peau du capot, dite troisième partie de moule), qui s'écarte des autres parties de moule 11, 14,
- injection d'une matière thermoplastique d'aspect 26 pour réaliser la couche de finition de peinture du capot, c'est-à-dire pour la réalisation de la couche à peindre 5 des figures 6 à 8,
- déplacement selon la flèche M3 de la partie de moule 11 (moule côté nervures 3, dite deuxième partie de moule),
- injection d'une matière plastique 27 pour assurer la liaison avec la trame de renfort 13,
- injection d'une mousse de matière plastique 28 expansible pour l'insonorisation, c'est-à-dire pour réaliser la couche de produit insonorisant 9 des figures 3 et 6,

La présente invention présente de nombreux avantages, parmi lesquels les avantages suivants :
- elle permet de réduire la masse du capot,
- elle permet de réduire le nombre de moules de fabrication,
- elle permet de supprimer l'assemblage des différentes pièces constitutives d'un capot, à savoir la peau, la doublure et l'élément d'insonorisation, le capot selon l'invention étant en une seule pièce, et
- elle permet d'améliorer la rigidité et les performances mécaniques du capot.
- elle permet d'intégrer facilement et dans un espace minimal des éléments de renfort dans certaines zones du capot, de façon à répondre aux exigences de la réglementation relative au choc piéton.

## Revendications

1. Capot de véhicule, en particulier de véhicule automobile, dans lequel est noyée une trame de renfort mécanique (13 ; 13'), **caractérisé en ce qu'**il est rigidifiée par un réseau intégré de corps creux (2) et par un réseau intégré de nervures (3), ledit réseau de nervures (3) assurant la liaison entre les corps creux (2), et **en ce qu'**il forme avec son réseau de corps creux et son réseau de nervure un ensemble mono pièce en matériau plastique obtenu directement par moulage.

2. Capot selon la revendication 1, **caractérisé en ce que** ladite trame de renfort mécanique (13 ; 13') est une trame métallique.

3. Capot selon la revendication 2, **caractérisé en ce que** ladite trame métallique (13 ; 13') est réalisée en acier inoxydable.

4. Capot selon la revendication 1, **caractérisé en ce que** ladite trame (13 ; 13') de renfort mécanique est une trame en matériau non ferreux, et **en ce que** la matière plastique de la plaque est une matière thermoplastique ou thermodurcissable chargée d'un matériau conducteur.

5. Capot selon la revendication 4, **caractérisé en ce que** ladite trame de renfort mécanique (13 ; 13') est réalisée dans une matière choisie parmi les matières suivantes : fibres de verre, fibres de carbone, fibres de basalte.

6. Capot selon la revendication 1, **caractérisé en ce que** des bossages creux (4) sont prévus dans des zones pour améliorer l'absorption des efforts en cas de choc piéton.

7. Capot selon l'une quelconque des revendications 1 à 6, **caractérisé en ce que** sa surface supérieure est revêtue d'une couche de surface à peindre (5).

8. Capot selon l'une quelconque des revendications 1 à 7, **caractérisé en ce qu'**une partie au moins de +sa surface inférieure est revêtue d'une couche de matière d'isolation acoustique (9).

9. Capot selon la revendication 3, **caractérisé en ce que** la trame métallique (13 ; 13') en acier inoxydable est constituée d'une pluralité de segments et comporte au moins des segments reliant la zone de serrure (21) et les zones des charnières (20) du capot.

10. Capot selon l'une quelconque des revendications 1 à 9, **caractérisé en ce qu'**il comprend un puit (7), qui traverse le corps creux (2) du capot et qui sert de canon pour la fixation d'un élément ou emblème (8).

11. Capot selon l'une quelconque des revendications 1 à 9, **caractérisé en ce qu'**il comprend un puit débouchant (7'), qui ne traverse pas totalement le corps creux (2) du capot de manière à réaliser un renforcement du corps creux (2) et à rendre ce dernier plus rigide en flexion et en torsion.

12. Dispositif de fabrication par moulage d'un capot de véhicule conforme à l'une quelconque des revendications 1 à 11, **caractérisé en ce qu'**il comprend les trois parties principales suivantes :
- une première partie de moule (14) faisant fonction de matrice et située à la base du dispositif,
- une deuxième partie de moule (11) faisant également fonction de matrice, qui est située du côté des nervures (3) du capot et qui peut être déplacée par rapport à ladite première partie de moule (14) façon à permettre la réalisation d'une injection de matière, - une troisième partie de moule (10), qui est située du côté de la peau (1) du capot et qui peut être déplacée par rapport auxdites première et deuxième parties de moule (14, 11) de façon à permettre aussi la réalisation d'une injection de matière,
et **en ce qu'**il comprend des moyens de réalisation des corps creux (2) du capot, qui sont des moyens d'injection de gaz ou d'eau.

13. Dispositif selon la revendication 12, **caractérisé en ce que** la deuxième partie de moule (11) comporte des éléments magnétiques pour le maintien par des moyens magnétiques ou électromagnétiques de la trame de renfort (13 ; 13') du capot.

14. Procédé de fabrication par moulage d'un capot de véhicule conforme à l'une quelconque des revendications 1 à 11, à l'aide d'un dispositif de moulage selon l'une quelconque des revendications 12 à 13, **caractérisé par** les étapes suivantes, prises en combinaison :
- mise en place de la trame (13 ; 13') de renfort de capot, en appui sur les créneaux de fond (29) de nervure (3) et sur les flancs (30) de nervure (3),
- injection d'une matière plastique rigide (15) pour la réalisation du capot,
- déplacement de la troisième partie de moule (10), qui s'écarte des autres parties de moule (11, 14),
- injection d'une matière thermoplastique (26) d'aspect pour réaliser une couche de finition peinture du capot,
- déplacement de la deuxième partie de moule (11), qui s'écarte de la troisième partie de moule (10),
- injection d'une matière plastique (27) pour assurer la liaison avec la trame de renfort (13 ; 13'),
- injection d'une mousse de matière plastique (28) expansible pour l'insonorisation.

## Claims

1. A vehicle bonnet, in particular of a motor vehicle, in which a mechanical reinforcing frame (13; 13') is embedded, **characterized in that** it is rigidified by an integrated network of hollow bodies (2) and by an integrated network of ribs (3), the said network of ribs (3) ensuring the connection between the hollow bodies (2), and **in that** it forms with its network of hollow bodies and its network of ribs a single-piece unit of plastic material obtained directly by moulding.

2. The bonnet according to Claim 1, **characterized in that** the said mechanical reinforcing frame (13; 13') is a metallic frame.

3. The bonnet according to Claim 2, **characterized in that** the said metallic frame (13' 13') is made from stainless steel.

4. The bonnet according to Claim 1, **characterized in that** the said mechanical reinforcing frame (13; 13') is a frame of non-ferrous material, and **in that** the plastic material is a thermoplastic or thermosetting material charged with a conductive material.

5. The bonnet according to Claim 4, **characterized in that** the said mechanical reinforcing frame (13; 13') is made from a material selected from the following materials: glass fibres, carbon fibres, basalt fibres.

6. The bonnet according to Claim 1, **characterized in that** hollow bosses (4) are provided in zones to improve the absorption of stresses in the case of a pedestrian impact.

7. The bonnet according to any one of Claims 1 to 6, **characterized in that** its upper surface is covered by a layer of surface to be painted (5).

8. The bonnet according to any one of Claims 1 to 7, **characterized in that** a part at least of its lower surface is covered by a layer of acoustic insulation material (9).

9. The bonnet according to Claim 3, **characterized in that** the metallic frame (13; 13') of stainless steel is constituted by a plurality of segments and includes at least segments connecting the lock zone (21) and the zones of hinges (20) of the bonnet.

10. The bonnet according to any one of Claims 1 to 9, **characterized in that** it comprises a well (7), which passes through the hollow body (2) of the bonnet and which serves as a bush for the fixing of an element or emblem (8).

11. The bonnet according to any one of Claims 1 to 9, **characterized in that** it comprises an opening well (7') which does not totally pass through the hollow body (2) of the bonnet so as to produce a reinforcement of the hollow body (2) and to make the latter more rigid in flexion and in torsion.

12. A device for the manufacture by moulding of a vehicle bonnet according to any one of Claims 1 to 11, **characterized in that** it comprises the following three principal parts:
- a first mould part (14) having the function of a matrix and situated at the base of the device,
- a second mould part (11) also having the function of a matrix, which is situated on the side of the ribs (3) of the bonnet and which can be moved with respect to the said first mould part (14) so as to permit the realization of an injection of material,
- a third mould part (10), which is situated on the side of the skin (1) of the bonnet and which can be moved with respect to the said first and second mould parts (14, 11) so as to also permit the realization of an injection of material,
and **in that** it comprises means for producing the hollow bodies (2) of the bonnet, which are means of injection of gas or of water.

13. The device according to Claim 12, **characterized in that** the second mould part (11) includes magnetic elements for the maintaining by magnetic or electromagnetic means of the reinforcing frame (13; 13') of the bonnet.

14. A method for manufacturing by moulding of a vehicle bonnet according to any one of Claims 1 to 11, with the aid of a moulding device according to any one of Claims 12 to 13, **characterized by** the following steps, taken in combination:
- putting in place of the reinforcing frame (13; 13') of the bonnet, resting on the base gaps (29) of rib (3) and on the flanks (30) of rib (3),
- injection of a rigid plastic material (15) for the production of the bonnet,
- movement of the third mould part (10), which separates from the other mould parts (11, 14),
- injection of a thermoplastic material (26) having an appearance for producing a finishing painted layer of the bonnet,
- movement of the second mould part (11), which separates from the third mould part (10),
- injection of a plastic material (27) to ensure the connection with the reinforcing frame (13; 13'),
- injection of a foam of expandable plastic material (28) for acoustic insulation.

## Patentansprüche

1. Fahrzeughaube, insbesondere für ein Kraftfahrzeug, in der ein mechanischer Verstärkungsschuss (13; 13') eingelassen ist, **dadurch gekennzeichnet, dass** sie durch ein integriertes Netz von Hohlkörpern (2) und durch ein integriertes Netz von Rippen (3) versteift ist, wobei das Rippennetz (3) die Verbindung zwischen den Hohlkörpern (2) sicherstellt, wobei ihr Hohlkörpernetz und ihr Rippennetz eine einteilige Baugruppe aus Kunststoff bilden, die direkt durch Formen erzielt wird.

2. Haube nach Anspruch 1, **dadurch gekennzeichnet, dass** der mechanische Verstärkungsschuss (13; 13') ein metallischer Schuss ist.

3. Haube nach Anspruch 2, **dadurch gekennzeichnet, dass** der metallische Schuss (13; 13') aus rostfreiem Stahl hergestellt ist.

4. Haube nach Anspruch 1, **dadurch gekennzeichnet, dass** der mechanische Verstärkungsschuss (13; 13') ein Schuss aus nicht eisenhaltigem Werkstoff ist, und dass der Kunststoff ein Thermoplastmaterial oder wärmehärtbares Material, das mit leitendem Material gefüllt ist, ist.

5. Haube nach Anspruch 4, **dadurch gekennzeichnet, dass** der mechanische Verstärkungsschuss (13; 13') aus einem Material hergestellt ist, das aus den folgenden Materialien ausgewählt ist: Glasfaser, Kohlenstofffaser, Basaltfaser.

6. Haube nach Anspruch 1, **dadurch gekennzeichnet, dass** hohle Buckel (4) in Bereichen vorgesehen sind, um die Absorption der Kräfte in dem Fall eines Fußgängeraufpralls zu verbessern.

7. Haube nach einem der Ansprüche 1 bis 6, **dadurch gekennzeichnet, dass** ihre obere Fläche mit einer zu lackierenden Oberflächenschicht (5) überzogen ist.

8. Haube nach einem der Ansprüche 1 bis 7, **dadurch gekennzeichnet, dass** mindestens ein Teil ihrer unteren Oberfläche mit einer akustischen Isoliermaterialschicht (9) überzogen ist.

9. Haube nach Anspruch 3, **dadurch gekennzeichnet, dass** der metallische Schuss (13; 13') aus rostfreiem Stahl aus einer Vielzahl von Segmenten besteht und mindestens Segmente aufweist, die den Schlossbereich (21) und die Scharnierbereiche (20) der Haube verbinden.

10. Haube nach einem der Ansprüche 1 bis 9, **dadurch gekennzeichnet, dass** sie einen Schacht (7) aufweist, der den Hohlkörper (2) der Haube durchquert und der als Träger zum Befestigen eines Elements oder eines Abzeichens (8) dient.

11. Haube nach einem der Ansprüche 1 bis 9, **dadurch gekennzeichnet, dass** sie einen durchgehenden Schacht (7') aufweist, der den Hohlkörper (2) der Haube nicht ganz durchquert, so dass eine Verstärkung des Hohlkörpers (2) hergestellt und dieser Letztere biege- und torsionssteifer gemacht wird.

12. Vorrichtung zum Herstellen durch Formen einer Fahrzeughaube nach einem der Ansprüche 1 bis 11, **dadurch gekennzeichnet, dass** sie die folgenden drei Hauptteile aufweist:
- einen ersten Formteil (14), der als Gesenk dient und sich an der Basis der Vorrichtung befindet,
- einen zweiten Formteil (11), der ebenfalls als Gesenk dient, der sich auf der Seite der Rippen (3) der Haube befindet, und der in Bezug zu dem ersten Formteil (14) derart verlagert werden kann, dass er das Ausführen eines Materialeinspritzens erlaubt,
- einen dritten Formteil (10), der sich auf der Seite der Haut (1) der Haube befindet, und der in Bezug zu dem ersten und dem zweiten Formteil (14, 11) derart verlagert werden kann, dass auch das Herstellen einer Materialeinspritzung erlaubt wird,
und dass sie Mittel zum Herstellen der Hohlkörper (2) der Haube aufweist, die Gas- oder Wassereinspritzmittel sind.

13. Vorrichtung nach Anspruch 12, **dadurch gekennzeichnet, dass** der zweite Formteil (11) magnetische Elemente zum Halten durch magnetische oder elektromagnetische Mittel des Verstärkungsschusses (13; 13') der Haube aufweist.

14. Herstellungsverfahren durch Formen einer Fahrzeughaube nach einem der Ansprüche 1 bis 11 mit Hilfe einer Formvorrichtung nach einem der Ansprüche 12 bis 13, **gekennzeichnet durch** die folgenden Schritte, die kombiniert genommen werden:
- Anbringen des Verstärkungsschusses (13; 13') der Haube in Auflage auf den Böden (29) von Rippen (3) und auf den Flanken (30) von Rippen (3),
- Einspritzen eines starren Kunststoffs (15) zum Herstellen der Haube,
- Verlagern des dritten Formteils (10), der sich von den Formteilen (11, 14) beabstandet,
- Einspritzen eines Dekorthermoplastmaterials (26) zum Herstellen einer Lackierendfertigungsschicht der Haube,
- Verlagern des zweiten Formteils (11), der sich von dem dritten Formteil (10) beabstandet,
- Einspritzen eines Kunststoffs (27) zum Sicherstellen der Verbindung mit dem Verstärkungsschuss (13; 13'),
- Einspritzen eines expansiblen Plastikschaumstoffs (28) zur Schalldämmung.
